# EUROPÄISCHE PATENTSCHRIFT

(11) **EP 0 926 253 B1**
(45) Veröffentlichungstag und Bekanntmachung des Hinweises auf die Patenterteilung: **10.04.2002**
(21) Anmeldenummer: 97119100.2
(22) Anmeldetag: 01.11.1997
(51) Int. Cl.: C23C 4/06, C23C 4/12, C23C 4/18, B65G 39/07, B65G 23/04

(54) **Verfahren zur Herstellung von Gurttrommeln**
Process for the manufacture of belt rollers
Procédé de fabrication de rouleaux de bande

(43) Veröffentlichungstag der Anmeldung: 30.06.1999
(73) Patentinhaber: Flamang, Alfred, 47906 Kempen (DE)
(72) Erfinder: Flamang, Alfred, 47906 Kempen (DE)
(74) Vertreter: Masch, Karl Gerhard, Dr.

(56) Entgegenhaltungen:
- EP-A- 0 235 343
- DE-A- 3 328 972
- DE-A- 4 429 142
- GB-A- 2 154 614
- BARBEZAT ET AL.: "APPLYING TUNGSTEN CARBIDE COBALT COATINGS BY HIGH VELOCITY COMBUSTION SPRAYING" SULZER TECHNICAL REVIEW, Bd. 4, 1988, Seiten 4-10, XP002060915 WINTERTHUR, CH

## Beschreibung

Die Erfindung betrifft ein Verfahren zur Herstellung von Gurttrommeln.

Zur Verbesserung der Verschleißeigenschaften von Gurttrommeln ist es bekannt, diese mit aufgeschweißten oder auch auswechselbaren gummierten Verschließbelägen (DE-A 33 28 972) oder auf ihrer äußeren Mantelfläche mit emaillierten Stahlbuchsen (EP-A 0 235 343) zu versehen.

Bekannt ist es auch (GB-A 2 154 614) Stahlteile insbesondere in Form von Bremstrommeln und Bremsscheiben, zum Erhalt bzw. zur Erhöhung der Leistungsfähigkeit mit einer Hartmetallschicht zu versehen, indem ein pulverförmiges, aus zumindest einem Hartstoff und einem Bindemittel gesintertes Hartmetall mittels Hochge-schwindigkeitsflammspritzen auf die Stahlteile aufgebracht und heißisostatisch nachverdichtet wird.

Bekannt ist es ferner, (G. Barbezat et al "Applying Tungsten Carbite Cobalt Coatings by High Velocity Combustion Spraying", Sulzer Technical Review 4/1988, Seiten 4 bis 10, XP-002060915), Stahlteile zum Zwecke des Verschleißschutzes nach Aufrauhen mittels Hochgeschwindigkeitsflammspritzen, bei dem die verspritzten Partikel Überschallgeschwindigkeit erreichen können, mit einer Hartmetallschicht zu versehen, die aber nicht heißisostatisch nachverdichtet wird.

Bei einem aus der Praxis bekannten, druckschriftlich nicht näher belegten Verfahren der genannten Art werden aus den Hartmetallausgangsstoffen und Paraffin durch Agglomerieren mittels heißer Zerstäubungstrocknung pulverförmige Partikel erzeugt, aus denen in einem Preßwerkzeug, das mit Schrumpfzugabe in etwa die Form des Formteils vorgibt, Preßlinge auf den Stahlteilen erzeugt, die bei Temperaturen bis etwa 600 °C vorgesintert und zur Entfernung des Paraffins entwachst werden, wobei sogenanntes grünes Hartmetall entsteht. Anschließend erfolgt das heißisostatische Nachverdichten (HIP-Verfahren). Der Hauptnachteil dieses Verfahrens ist darin zu sehen, daß für unterschiedliche Formteile auch unterschiedliche Preßwerkzeuge benötigt werden, die das Verfahren verhältnismäßig unwirtschaftlich machen. Verbesserungsfähig ist auch der Verbund zwischen Hartmetallschicht und Stahlteil, der nur aus einer mechanischen Verkrallung besteht.

Der Erfindung liegt die Aufgabe zugrunde, Gurttromeln in verschleißanfälligen Bereichen ohne formgebendes Werkzeug erheblich widerstandsfähiger auszurüsten.

Zur Lösung dieser Aufgabe lehrt die Erfindung ein Verfahren zur Herstellung von Gurttrommeln, die in verschleißanfälligen Bereichen auf ihrer äußeren Mantelfläche mit einer Hartmetallschicht versehenen Stahlbuchsen aufweisen, wobei die Hartmetallschicht aus einem pulverförmigen Hartmetall, welches aus zumindest einem Hartstoff und einem Bindemittel gesintert ist, mittels Hochgeschwindigkeitsflammspritzen auf die Stahlbuchsen aufgebracht und einem heißisostatischen Nachverdichten unterworfen wird.

Hochgeschwindigkeitsflammspritzen, welches im internationalen Sprachgebrauch die Kurzbezeichnung HVOF (High Velocity Oxygen Fuel) führt, meint ein Verfahren, bei dem der Spritzwerkstoff wie beim Flammspritzen in einer Brenngas/Sauerstoffflamme oder Kerosin/Sauerstoffflamme erwärmt wird und die Geschwindigkeit der Partikel um ein Mehrfaches höher ist als beim üblichen Flammspritzen. Dies wird dadurch erreicht, dass die Verbrennung unter hohem Druck erfolgt, so dass der heiße Gasstrahl mit etwa 2000 m/sec ausströmt und das pulverförmige Spritzmaterial in den heißen Gasstrahl injiziert wird. Ein Kennzeichen der hohen Strömungsgeschwindigkeit sind die deutlich sichtbaren Überschallknoten im Gasstrahl.

Die Erfindung beruht auf der überraschenden Erkenntnis, dass das mittels Hochgeschwindigkeitsflammspritzen aufgebrachte Hartmetall im Gegensatz zu anderen thermischen Spritzverfahren, wie Plasmaspritzen, Pulverflammspritzen oder Lichtbogenspritzen, bereits eine so niedrige Porösität aufweist, dass das nachfolgende heißisostatische Nachverdichten voll zum Tragen kommt. Wie die Praxis gezeigt hat, liegt eine verschwindende Porösität des Hartmetalls ohne weiteres im Bereich des Möglichen. Vorteilhaft ist weiterhin die nicht vorhersehbare Tatsache, dass durch die kombinative Anwendung von Hochgeschwindigkeitsflammspritzen und heißisostatischem Nachverdichten nicht nur eine mechanische Verkrallung sondern sogar ein metallurgischer Verbund zwischen Hartmetallschicht und Stahlteil entsteht. Untersuchungen haben ergeben, dass spannungsfreie Hartmetallschichten von mehreren Millimetern Dicke und hoher Qualität hergestellt werden könnten, und zwar ohne jegliches formgebendes Werkzeug. Die nach dem erfindungsgemäßen Verfahren hergestellten Gurttrommeln werden insbesondere in einem Braunkohlebergwerk eingesetzt. Zur Verbesserung der Verschleißeigenschaft zwischen Gurttrommel und Gurtband sind dort bisher aufgeschweißte oder gummierte Verschleißbeläge eingesetzt worden, bei denen jedoch immer wieder frühzeitig in erster Linie durch reibenden Mineralverschleiß Verschleißschäden, z. B. in Form von starkem Abrieb oder von Abplatzungen, auftreten; im Ergebnis muß bisher die betreffende Gurttrommel gewechselt werden, was je nach Einbaustelle sehr kostenintensiv ist. Bei den Gurttrommeln ergeben sich so wesentlich längere Standzeiten. Die glatte Hartmetalloberfläche führt jedenfalls zu einem wesentlich geringeren Verschleiß als raue Aufschweißungen.

Für die weitere Ausgestaltung bestehen im Rahmen der Erfindung mehrere Möglichkeiten, deren bevorzugte nachfolgend aufgeführt sind. Dementsprechend besteht das Hartmetall vorzugsweise zu 70 bis 94 Gew.-% aus Hartstoffen in Form von WC (Wolframkarbid), TiC (Titankarbid), TaC (Tantalkarbid), Mo₂C (Molybdänkarbid) und/oder Nb₂C (Niobkarbid) und im Rest aus Bindemittel in Form von Co (Kobalt), Ni (Nickel) und/oder Cr (Chrom). Das zum Einsatz gelangende pulverförmige Hartmetall kann aus den Ausgangsstoffen, nämlich Hartstoff und Bindemittel, durch Agglomerieren mittels heißer Zerstäubungstrocknung und Sintern, aber auch durch entsprechendes Herunterbrechen von grünem Hartmetall erzeugt sein. Die mit der Hartmetallschicht zu versehene Oberfläche des Stahlteils ist zweckmäßigerweise aufgerauht und gereinigt worden, bevor das Hartmetall durch das Hochgeschwindigkeitsflammspritzen, das vorzugsweise aus einem Kerosin-Hochgeschwindigkeitsflammspritzen besteht, aufgebracht worden ist. Im Übrigen empfiehlt es sich, dass heißisostatische Nachverdichten bei einem Druck von 60 bis 2000 bar und bei einer Temperatur von 1000 bis 1450 °C mit einem Inertgas, insbesondere Argon, durchzuführen.

Die mit der Hartmetallschicht versehenen Stahlbuchsen können durch Aufschrumpfen, Aufkleben oder Anschweißen mit den Gurttrommeln in Verbund gebracht werden. Dabei sind je nach Einsatzort maßgeschneiderte Lösungen möglich, indem Stahlbuchsen mit Hartmetallschichten unterschiedlicher Dicke nebeneinander auf ein und derselben Gurttrommel befestigt werden.

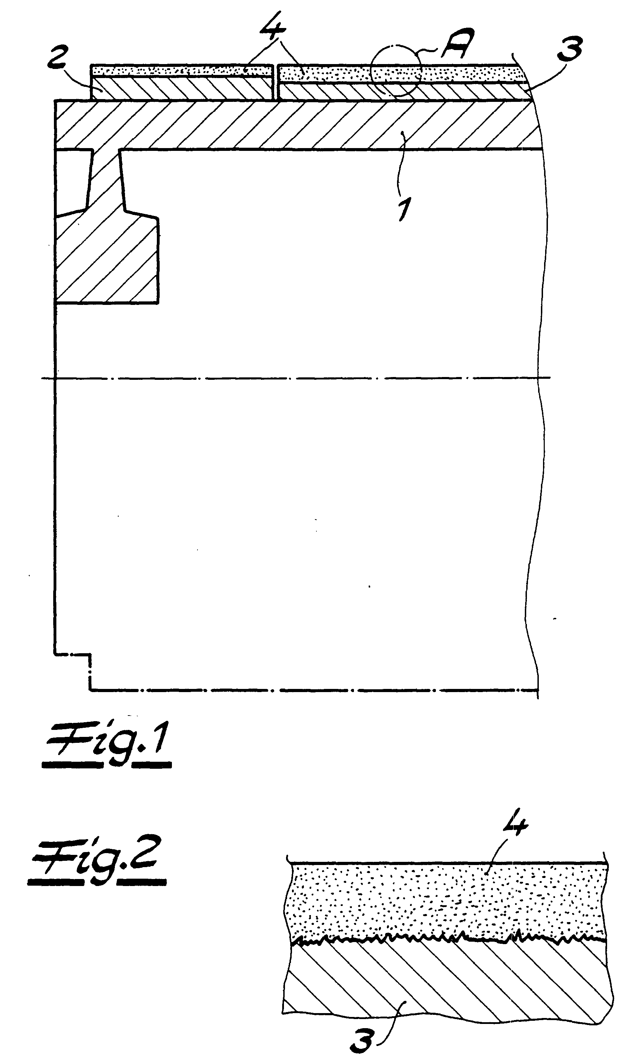

Im Folgenden wird die Erfindung anhand einer Zeichnung erläutert. Es zeigen
- Fig.1: eine Gurttrommel und
- Fig. 2: den vergrößerten Ausschnitt A aus dem Gegenstand der Fig. 1.

Die in den Figuren dargestellte Gurttrommel besteht aus einem Hohlzylinder 1, auf den zwei Stahlbuchsen 2, 3 mit äußerer Hartmetallschicht 4 unterschiedlicher Dicke aufgeschrumpft sind.

Zur Herstellung der Hartmetallschichten 4 sind die jeweiligen Stahlbuchsen 2, 3 auf ihrer äußeren Mantelfläche aufgerauht und in technisch reinen Zustand gebracht worden. Alsdann wurden die Stahlbuchsen 2, 3 an den so vorbereiteten Flächen mittels Hochgeschwindigkeitsflammspritzen mit pulverförmigem Hartmetall beschichtet. Anschließend wurde bei einem Druck von 1500 bar und einer Temperatur von 1400 °C mit Argon isostatisch nachverdichtet.

## Patentansprüche

1. Verfahren zur Herstellung von Gurttrommeln, die in verschleißanfälligen Bereichen auf ihrer äußeren Mantelfläche mit einer Hartmetallschicht (4) versehenen Stahlbuchsen (2, 3) aufweisen, wobei die Hartmetallschicht aus einem pulverförmigen Hartmetall, welches aus zumindest einem Hartstoff und einem Bindemittel gesintert ist, mittels Hochgeschwindigkeitsflammspritzen auf die Stahlbuchsen aufgebracht und einem heißisostatischen Nachverdichten unterworfen wird.

2. Verfahren nach Anspruch 1, wobei das Hartmetall zu 70 bis 94 Gew.-% aus Hartstoffen in Form von WC, TiC, TaC, Mo₂C und/oder Nb₂C und im Rest aus Bindemittel in Form von Co, Ni und/oder Cr besteht.

3. Verfahren nach Anspruch 1 oder 2, wobei das pulverförmige Hartmetall durch Agglomerieren mittels heißer Zerstäubungstrocknung und nachfolgendes Sintern gebildet wird.

4. Verfahren nach einem der Ansprüche 1 bis 3, wobei das pulverförmige Hartmetall durch Herunterbrechen von grünem Hartmetall gebildet wird.

5. Verfahren nach einem der Ansprüche 1 bis 4, wobei die mit der Hartmetallschicht (4) zu versehende Oberfläche des Stahlteils (2, 3) aufgerauht wird.

6. Verfahren nach einem der Ansprüche 1 bis 5, wobei das Hochgeschwindigkeitsflammspritzen aus einem Kerosin-Hochgeschwindigkeitsflammspritzen besteht.

7. Verfahren nach einem der Ansprüche 1 bis 6, wobei heißisostatische Nachverdichten bei einem Druck von 60 bis 2000 bar und bei einer Temperatur von 1000 bis 1450 °C mit einem Inertgas, insbesondere Argon, durchgeführt wird.

8. Verfahren nach einem der Ansprüche 1 bis 7, wobei die mit der Hartmetallschicht (4) versehenen Stahlbuchsen (2, 3)durch Aufschrumpfen, Aufkleben oder Anschweißen mit den Gurttrommeln in Verbund gebracht werden.

9. Verfahren nach einem der Ansprüche 1 bis 8, wobei Stahlbuchsen (2, 3) mit Hartmetallschichten (4) unterschiedlicher Dicke nebeneinander auf ein und derselben Gurttrommeln befestigt werden.

## Claims

1. A procedure for manufacturing belt drums, whose outside jacket surface exhibits steel bushings (2, 3) provided with a hard metal layer (4), wherein the hard metal layer is sintered from a powdery hard metal consisting of at least one hard material and a binding agent, applied to the steel bushings via high-speed flame spraying and subjected to a hot isostatic sealing.

2. A procedure according to claim 1, wherein the hard metal consists of 70 to 94 %w/w hard materials in the form of WC, TiC, TaC, Mo₂C and/or Nb₂C, and the remainder out of binding agent in the form of Co, Ni and/or Cr.

3. A procedure according to claim 1 or 2, wherein the powdery hard metal is formed through agglomeration via hot spray drying and subsequent sintering.

4. A procedure according to one of claims 1 to 3, wherein the powdery hard metal is formed by breaking down green hard metal.

5. A procedure according to one of claims 1 to 4, wherein the surface of the steel section (2, 3) to be provided with the hard metal layer (4) is roughened.

6. A procedure according to one of claims 1 to 5, wherein the high-speed flame spraying involves kerosene high-speed flame spraying.

7. A procedure according to one of claims 1 to 6, wherein hot isostatic sealing is performed at a pressure of 60 to 2000 bar and temperature of 1000 to 1450 °C with an inert gas, in particular argon.

8. A procedure according to one of claims 1 to7, wherein the steel bushings (2, 3) provided with the hard metal layer (4) can be bonded with the belt drums shrinking, adhesion or welding.

9. A procedure according to one of claims 1 to 8, wherein steel bushings (2, 3) with hard metal layers (4) of varying thickness are secured one next to each other on one and the same belt drums.

## Revendications

1. Procédé pour la fabrication de tambours à courroies qui présentent, dans des zones sensibles à l'érosion sur leur surface latérale externe, des coussinets en acier (2, 3) munis d'une couche de métal dur (4), dans lequel on applique la couche de métal dur constituée d'un métal dur pulvérulent, qui a été fritté à partir d'au moins une substance dure et un liant, sur les coussinets en acier par métallisation à la flamme à grande vitesse et on soumet la couche à une compression isostatique ultérieure à température élevée.

2. Procédé selon la revendication 1, dans lequel le métal dur est constitué à concurrence de 70 à 94 % en poids par des substances dures sous la forme de WC, TiC, TaC, Mo₂C et/ou Nb₂C et pour le reste par un liant sous la forme de Co, Ni et/ou Cr.

3. Procédé selon la revendication 1 ou 2, dans lequel on forme le métal dur pulvérulent par agglomération à l'aide d'un séchage à la chaleur par pulvérisation et par frittage ultérieur.

4. Procédé selon l'une quelconque des revendications 1 à 3, dans lequel on forme le métal dur pulvérulent via une réduction par désintégration de métal dur vert.

5. Procédé selon l'une quelconque des revendications 1 à 4, dans lequel on rend rugueuse la surface de l'élément en acier (2, 3) qui doit être munie de la couche de métal dur (4).

6. Procédé selon l'une quelconque des revendications 1 à 5, dans lequel la métallisation à la flamme à grande vitesse est constituée d'une métallisation à la flamme à grande vitesse de kérosène.

7. Procédé selon l'une quelconque des revendications 1 à 6, dans lequel on procède à la compression isostatique ultérieure à température élevée sous une pression de 60 à 2000 bar et à une température de 1000 à 1450 °C avec un gaz inerte, en particulier de l'argon.

8. Procédé selon l'une quelconque des revendications 1 à 7, dans lequel on amène les coussinets en acier (2, 3) munis de la couche de métal dur (4) en liaison avec les tambours à courroies par frettage, par collage ou par soudage.

9. Procédé selon l'une quelconque des revendications 1 à 8, dans lequel on fixe des coussinets en acier (2, 3) possédant des couches de métal dur (4) d'épaisseurs différentes les uns à côté des autres sur un seul et même tambour à courroie.
